# EUROPEAN PATENT APPLICATION

(11) **EP 4 524 618 A1**
(43) Date of publication of application: **19.03.2025**
(21) Application number: 23197041.9
(22) Date of filing: 13.09.2023
(51) Int. Cl.: G01T 1/20

(54) **SYSTEM AND METHOD FOR CHANNEL MULTIPLEXING FOR SILICON PHOTOMULTIPLIERS**

(71) Applicant: Gscan OÜ, 12618 Tallinn (EE)
(72) Inventor: Ersoy, Erkan, 13416 Tallinn (EE); Priidel, Eiko, 11212 Tallinn (EE)
(74) Representative: Moosedog Oy

(57) **Abstract**

Disclosed is a system (100) for channel multiplexing for Silicon Photomultipliers (SiPMs) (102A-N, 202, 204, 206, 208, 300A-D, Al-9, 800, 802, 804, 806) connected to scintillating fibres (SF) (104A-N). The system comprises plurality of SiPMs arranged in a matrix (200), each connected to one SF, and one of rows (210, 212, 304, 306, X1, X2, X3, 816, 818) and one of columns (214, 216, 308, 310, Y1, Y2, Y3, 824, 826) of the matrix. Upon detecting light, each SiPM generates a signal. A charge division module (106) divides each SiPM signal into two subsignals, which are sent to the respective row and column. A resistive encoding module (108) encodes each sub-signal into two proportional output signals. A data acquisition (DAQ) unit (110) interfaces with the resistive encoding module to receive and process these signals, configured with channels corresponding to the received signals.

## Description

### TECHNICAL FIELD

The present disclosure relates to systems for channel multiplexing for Silicon Photomultipliers (SiPMs) connected to scintillating fibres. Moreover, the present disclosure relates to methods for channel multiplexing for Silicon Photomultipliers (SiPMs) connected to scintillating fibres. Furthermore, the present disclosure relates to apparatuses for channel multiplexing for Silicon Photomultipliers (SiPMs) connected to scintillating fibres.

### BACKGROUND

Scintillating fibres are a type of optical fibres that exhibit scintillating properties (i.e., emission of light). In recent years, use of scintillating fibres in applications such as medical imaging, high-energy physics, nuclear instrumentation, and the like is ever increasing. Typically, Silicon Photomultipliers (SiPMs) are connected to the scintillating fibres to detect emission of light from the scintillating fibres and generate corresponding signals. The signals generated by the SiPMs contains information that is collected from operating the corresponding scintillating fibres.

Conventionally, plurality of SiPMs are arranged in arrays where the signals of the SiPMs are collected using data acquisition (DAQ) devices for further processing and analysis. However, in existing solutions, every single SiPM requires one communication channel from the DAQ devices to be connected with the SiPM, which significantly increases the number of communication channels required in the DAQ devices for acquisition of data from the plurality of SiPMs. Thus, the existing solutions are expensive and difficult to manage which subsequently, impose a limit on the number of SiPMs from which the DAQ devices can acquire data simultaneously. Although, some of the existing techniques implement channel multiplexing to reduce the number of communication channels to acquire data from the plurality of SiPMs. However, the existing solutions of channel multiplexing often compromise on sensitivity of the array of the plurality of SiPMs which leads to problems such as voltage insensitivity and communication channel imbalance.

Therefore, in light of the foregoing discussion, there exists a need to overcome the aforementioned drawbacks.

### SUMMARY

The aim of the present disclosure is to provide a system and a method to reduce a number of channels required to streamline a data acquisition process. The aim of the present disclosure is achieved by a system and a method for channel multiplexing for Silicon Photomultipliers (SiPMs) connected to scintillating fibres, as defined in the appended independent claims to which reference is made to. Advantageous features are set out in the appended dependent claims.

Throughout the description and claims of this specification, the words "*comprise*", "*include*", "*have*", and "*contain*" and variations of the words, for example "*comprising*" and "*comprises*", mean "*including but not limited to*", and do not exclude other components, integers or steps. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is a block diagram of a system for channel multiplexing for Silicon Photomultipliers (SiPMs) connected to scintillating fibres, in accordance with an embodiment of the present disclosure;
FIG. 2 is a schematic illustration of a plurality of Silicon Photomultipliers (SiPMs) arranged in a matrix, in accordance with an embodiment of the present disclosure;
FIG. 3 is a schematic illustration of diode division technique implemented in a charge division module for a plurality of SiPMs, in accordance with an embodiment of the present disclosure;
FIG. 4 is a schematic illustration of biasing of a diode division module, in accordance with an embodiment of the present disclosure;
FIG. 5 is a schematic illustration of resistor division technique implemented in a charge division module for a plurality of SiPMs, in accordance with an embodiment of the present disclosure;
FIG. 6 is a schematic illustration of an implementation of a ladder style resistive encoding technique, in accordance with an embodiment of the present disclosure;
FIG. 7 is a schematic illustration of an implementation of a line style resistive encoding technique, in accordance with an embodiment of the present disclosure;
FIG. 8 is a schematic illustration of diode division technique and resistor division technique implemented as a combination in a charge division module for a plurality of SiPMs, in accordance with an embodiment of the present disclosure;
FIG. 9 is a schematic illustration of biasing of diodes arranged for implementing the diode division technique in a matrix, in accordance with an embodiment of the present disclosure; and
FIG. 10 is a flowchart of a method for channel multiplexing for Silicon Photomultipliers (SiPMs) connected to scintillating fibres, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a system for channel multiplexing for Silicon Photomultipliers (SiPMs) connected to scintillating fibres, the system comprising:
- a plurality of SiPMs arranged in a matrix, with each of the plurality of SiPMs being connected to one of the scintillating fibres, and to one of rows and one of columns of the matrix, wherein each of the plurality of SiPMs is configured to generate an SiPM signal in response to detection of light by the corresponding one of the scintillating fibres;
- a charge division module interfacing with the plurality of SiPMs and configured to divide the SiPM signal from each of the plurality of SiPMs into two sub-signals, and wherein one of the two sub-signals is transmitted to the connected row and other of the two sub-signals is transmitted to the connected column of the corresponding one of the plurality of SiPMs;
- a resistive encoding module interfacing with the charge division module and configured to encode each of the two sub-signals from each of the rows and columns of the matrix into a set of two output signals proportional to each other; and
- a data acquisition (DAQ) unit interfacing with the resistive encoding module and configured to receive the sets of two output signals for processing thereof, wherein the DAQ unit is configured with a number of channels corresponding to the receives sets of two output signals.

The present disclosure provides the aforementioned system for channel multiplexing for Silicon Photomultipliers (SiPMs) connected to scintillating fibres. The system facilitates to significantly reduce a number of channels required to acquire data from the SiPMs by the DAQ unit. Thus, advantageously, reduction in the channels required in the DAQ unit results in increasing a number of SiPMs that can be connected to the DAQ unit. Moreover, the DAQ unit, the charge division module and the resistor division module required in the system involves elements that are easily available, thus, beneficially making a set-up of all the elements in the system cost-efficient, simplified and easy to manufacture.

In a second aspect, the present disclosure provides a method for channel multiplexing for Silicon Photomultipliers (SiPMs) connected to scintillating fibres, the method comprising:
- disposing a plurality of SiPMs arranged in a matrix, with each of the plurality of SiPMs being connected to one of the scintillating fibres, and to one of rows and one of columns of the matrix, wherein each of the plurality of SiPMs is configured to generate an SiPM signal in response to detection of light by the corresponding one of the scintillating fibres;
- dividing the SiPM signal from each of the plurality of SiPMs into two sub-signals via a charge division module interfacing with the plurality of SiPMs, wherein one of the two sub-signals is transmitted to the connected row and other of the two sub-signals is transmitted to the connected column of the corresponding one of the plurality of SiPMs;
- encoding each of the two sub-signals from each of the rows and columns of the matrix into a set of two output signals proportional to each other via a resistive encoding module interfacing with the charge division module; and
- receiving the sets of two output signals, via a data acquisition (DAQ) unit interfacing with the resistive encoding module, for processing thereof, wherein the DAQ unit is configured with a number of channels corresponding to the receives sets of two output signals.

The present disclosure provides the aforementioned method for channel multiplexing for Silicon Photomultipliers (SiPMs) connected to scintillating fibres. The method facilitates effective combining of charge division technique and resistive encoding technique, which enables to achieve a high degree of channel multiplexing. Thus, beneficially, the method helps to significantly reduce a number of channels required for interfacing with the DAQ unit.

In a third aspect, the present disclosure provides an apparatus for channel multiplexing for Silicon Photomultipliers (SiPMs) connected to scintillating fibres, wherein a plurality of SiPMs arranged in a matrix, with each of the plurality of SiPMs being connected to one of the scintillating fibres, and to one of rows and one of columns of the matrix, wherein each of the plurality of SiPMs is configured to generate an SiPM signal in response to detection of light by the corresponding one of the scintillating fibres, the apparatus comprising:
- a charge division module interfacing with the plurality of SiPMs and configured to divide the SiPM signal from each of the plurality of SiPMs into two sub-signals, and wherein one of the two sub-signals is transmitted to the connected row and other of the two sub-signals is transmitted to the connected column of the corresponding one of the plurality of SiPMs;
- a resistive encoding module interfacing with the charge division module and configured to encode each of the two sub-signals from each of the rows and columns of the matrix into a set of two output signals proportional to each other; and
- a number of channels corresponding to the receives sets of two output signals connected to a data acquisition (DAQ) unit for interfacing with the resistive encoding module and configured to receive the sets of two output signals for processing thereby.

The present disclosure provides the aforementioned apparatus for channel multiplexing for Silicon Photomultipliers (SiPMs) connected to scintillating fibres. The apparatus facilitates to significantly reduce a number of channels required to acquire data from the SiPMs by the DAQ unit. Moreover, the DAQ unit, the charge division module and the resistor division module required in the apparatus involves elements that are cheap and easily available, thus, beneficially making the apparatus cost-efficient and easy to manufacture.

Throughout the present disclosure, the term "*scintillating fibres*" refers to a type of optical fibres which exhibit scintillation properties (i.e., properties of emitting flashes of light). The scintillating fibres are designed to emit light signals on interaction with high-energy particles. Notably, the scintillating fibres are designed to have a core layer and a cladding layer. The core layer contains a scintillating material which may be a crystalline or a plastic scintillator. The cladding layer surrounds the core layer and helps to guide the emitted light signals along the length of the scintillating fibres. It will be appreciated that the scintillating fibres are flexible and easily shaped into different forms, which makes the scintillating fibres suitable for use in applications such as medical imaging, high-energy physics, nuclear instrumentation, and the like.

Throughout the present disclosure, the term "*silicon photomultipliers*" refers to a type of solid-state photodetector that is used to detect and measure low levels of light, mostly in applications that involve high sensitivity, compact size, and low power consumption. The silicon photomultipliers (SiPMs) operate on a principle of avalanche photodiodes (APDs) operating in a Geiger mode. Notably, the SiPMs provide excellent photon counting capabilities which makes the SiPMs suitable for detection of photons. It will be appreciated that the SiPMs are connected to the scintillating fibres as the SiPMs are suitable to detect the light signals emitted by the scintillating fibres due to high photon detection efficiency of the SiPMs.

Notably, the SiPMs require to be connected to the channels to transmit information related to whether the emitted light signals from the scintillating fibres are detected by the SiPMs or not. Thus, in applications that involve a high number of SiPMs working simultaneously, a significantly high number of channels are required to acquire all the information from the SiPMs. Throughout the present disclosure, the term "*channel multiplexing*" refers to a technique in which data and information from various sources is transmitted over a single channel of communication. Notably, the channel multiplexing technique enables efficient utilization of available resources and reduces the number of channels required for transmission of information. Subsequently, employing channel multiplexing for the SiPMs reduces the number of channels required for transmission of information from the SiPMs.

Optionally, the system further comprises a plurality of amplifiers configured to amplify SiPM signals to prevent losses during multiplexing, wherein the plurality of amplifiers comprises one or more of: Radio Frequency (RF) amplifiers, transistor amplifiers and trans-impedance amplifier. Throughout the present disclosure, the term "*amplifier*" refers to a device or a circuit that increases an amplitude or power of any electrical signal. Notably the amplifiers are used in the system to increase the power of the SiPM signals. The technical effect is that amplifying the SiPM signals reduces any risk of losing information during the multiplexing of the SiPM signals. Advantageously, any commonly available type of amplifier such as the RF amplifiers, the transistor amplifiers, the trans-impedance amplifiers, and the like are suitable to be used in the system.

The system comprises the plurality of SiPMs arranged in the matrix, with each of the plurality of SiPMs being connected to one of the scintillating fibres, and to one of the rows and one of the columns of the matrix, wherein each of the plurality of SiPMs is configured to generate the SiPM signal in response to detection of the light by the corresponding one of the scintillating fibres. Throughout the present disclosure, the term "*matrix*" refers to way of arranging the plurality of SiPMs in a rectangular array of rows and columns, where each of the plurality of SiPMs is connected to a certain row and a certain column in the matrix. Notably, arranging the plurality of SiPMs in form of the matrix enables multiple SiPMs to be connected in any single row or column of the matrix, where the single row or the column of the matrix acts as a single channel of transmission for the multiple SiPMs connected to the single row or the column. Thus, the arrangement of the plurality of SiPMs is suitable for channel multiplexing. For example, the 64 SiPMs are arranged in a matrix of 8 rows and 8 columns, where each of the 8 rows have 8 SiPMs arranged thereon and similarly, each of the 8 columns have 8 SiPMs arranged thereon. Throughout the present disclosure, the term "*SiPM signal*" refers to a signal that is generated by the said SiPM in response to the detection of the light by the corresponding one of the scintillating fibres. Herein, the SiPM signals are generated in form of electrical signals.

Moreover, the system comprises the charge division module interfacing with the plurality of SiPMs and configured to divide the SiPM signal from each of the plurality of SiPMs into two sub-signals, and wherein the one of the two sub-signals is transmitted to the connected row and the other of the two sub-signals is transmitted to the connected column of the corresponding one of the plurality of SiPMs. Throughout the present disclosure, the term "*charge division module*" refers to a module that is used to distribute electrical charges of the SiPM signal. Notably, dividing the electrical charges of the given SiPM signal essentially, divides the given SiPM signal itself into two parts which are the two sub-signals. Herein, the two sub-signals for the given SiPM signal only contains some part of the complete information that is present in the given SiPM signal respectively. It will be appreciated that the charge division of the given SiPM signal into the two sub-signals enables the given SiPM to utilize both the row and the column to which the given SiPM is connected for channel multiplexing. Subsequently to gather complete information of each of the SiPM signals at the data acquisition device, the one of the two sub-signals is transmitted to the connected row and the other of the two sub-signals is transmitted to the connected column of the corresponding each of the plurality of SiPMs.

Optionally, the charge division module implements one of diode division technique and resistor division technique. Throughout the present disclosure, the term "*diode division technique*" refers to a technique in which each SiPM is connected with two separate diodes that enables to divide the corresponding SiPM signal into the two sub-signals. Throughout the present disclosure, the term "*resistor division technique*" refers to a technique in which each SiPM is connected with two separate resistors that enables to divide the corresponding SiPM signal into the two sub-signals. Herein, when the charge division module implements the diode division technique, the presence of diodes in the system enables to block the SiPM signal of the each SiPM from travelling back into another SiPM from amongst the plurality of SiPMs. Similarly, when the charge division module implements the resistor division technique, the presence of resistors in the system enables to resist the SiPM signal of the each SiPM from travelling back into another SiPM from amongst the plurality of SiPMs. The technical effect is that the charge division module is able to effectively distribute the charge into the two sub-signals for each of the SiPMs by implementing one of the diode division technique and the resistor division technique without any significant loss of information.

Optionally, the diode division module are biased with a constant current to overcome the low light intensity from the scintillating fibres. Herein, biasing the diode division module with the constant current advantageously, enables a more stable operation of the diode division module. The biasing of the diode division module allows to overcome a forward bias in each diode in the diode division module as the presence of the forward bias in the diode division module reduces the intensity of the SiPM signals. The technical effect is that the operation of diode division module remains unaffected from the low light intensity from the scintillating fibres, and reduce a loss of information in the two-sub signals.

Biasing helps overcoming forward voltage of diode. Otherwise SiPM signal will suffer decrease amount of the diode forward voltage (in order to diode to conduct it needs more voltage then its forward voltage on its conducting direction).

Furthermore, the system comprises resistive encoding module interfacing with the charge division module and configured to encode each of the two sub-signals from each of the rows and columns of the matrix into a set of two output signals proportional to each other. Throughout the present disclosure, the term "*resistive encoding module*" refers to a module that is used to encode input signals from various input channels and provide a different set of two output signals of different proportions for each different input signal. Herein, the two sub-signals from each row and each column of the matrix are used as input signals and subsequently, the different sets of the two output signals are accordingly generated. Notably, the resistive encoding module comprises an arrangement of a plurality of resistors, where different set of resistors from amongst the plurality of resistors are used for each different input signal which generates a different set of two output signals.

Optionally, the resistive encoding module implements one of ladder style resistive encoding technique and line style resistive encoding technique. Throughout the present disclosure, the term "*ladder style resistive encoding technique*" refers to a technique of resistive encoding which involves arranging the plurality of resistors in a ladder like arrangement. Herein, the ladder like arrangement of the plurality of resistors are used in different combinations to get the set of two output signals. Throughout the present disclosure, the term "*line style resistive encoding technique*" refers to the technique of resistive encoding which involves arranging the plurality of resistors arranged in a line. The technical effect is that both the ladder style resistive encoding technique and the line style resistive encoding technique are easy to implement, cost efficient and provide fast operation.

Optionally, diodes in the resistive encoding module are biased with a constant current to overcome the low light intensity from the scintillating fibres. Herein, biasing the diodes with the constant current advantageously, enables a more stable operation of the diodes in the resistive encoding module. In this regard, biasing the diodes with the constant current, beneficially enables to avoid any low signal output from the resistive encoding module due to nature of the SiPM signals and the low light intensity from the scintillating fibres. The technical effect is that the operation of the diodes in the resistive encoding module remains unaffected from any negative effects of the low light intensity from the scintillating fibres, and reduce a loss of information.

Optionally, the resistor division technique is implemented in the charge division module and the ladder style resistive encoding technique is implemented in the resistive encoding module. In this regard, use of the resistor division technique in the charge division module uses different resistors arranged in parallel to the given SiPM that allows different values of current to pass and thus, act as a medium for charge division of the given SiPM signal. Herein, use of the ladder style resistive encoding in the resistive encoding technique involves using the plurality of resistors in different combinations to get the set of two output signals as a result of the resistive encoding module. The technical effect is that the both the resistor division technique and the ladder style resistive encoding are easy to implement and less resource intensive as they require only resistors that are easily and cheaply available.

Optionally, the plurality of SiPMs are arranged in an 8x8 matrix system, and wherein the charge division module and the resistive encoding module operate to provide a multiplexing ratio of 64 to 4, or 16. In this, regard, the channel multiplexing is done for the plurality of SiPMs at two different levels. The plurality of SiPMs arranged in the 8x8 matrix system are channel multiplexed at a primary level, where the 64 SiPMs are used as the input channels and the 8 rows and the 8 columns of the SiPMs are used as the output channels. Thus, the multiplexing ratio (a ratio of the input channels to the output channels) of 64 to 16 is achieved. Herein, the 8 rows and the 8 columns of the matrix system are channel multiplexed at a secondary level using the resistive encoding module to get 4 output channels. Herein, 2 of the 4 output channels are used to get the set of two output signals from the 8 rows of the matrix system, and the other 2 of the 4 output channels are used to get the set of two output signals from the 8 columns of the matrix system. Subsequently, the multiplexing ratio is further reduced to 16 to 4, and thus, beneficially, achieving a final multiplexing ratio of 64 to 4. Notably, the number of the plurality of SiPMs arranged in the matrix system is made not to exceed 64, as it may increase a number of dark counts within a given communication channel used in the channel multiplexing. The technical effect is that a high multiplexing ratio is achieved and the number of channels required to be finally connected with the DAQ unit is significantly reduced. Thus, advantageously, the DAQ unit is able to acquire data from a large number of the plurality of SiPMs without a need for the DAQ unit to be connected with each of the SiPM unit individually.

Furthermore, the system comprises the data acquisition (DAQ) unit interfacing with the resistive encoding module and configured to receive the sets of two output signals for processing thereof, wherein the DAQ unit is configured with the number of channels corresponding to the receives sets of two output signals. Throughout the present disclosure, the term "*data acquisition unit*" refers to a device or a unit that is used to collect, measure and process data from multiple data sources. Notably, the output channels of the resistive module that generates the sets of two output signals, acts as the data sources for the DAQ unit. It will be appreciated that the data is acquired by the DAQ unit in form of the sets of two output signals. Herein, as the received set of two output signals contains data generated by the scintillating fibres in the encoded form, thus, subsequently, the DAQ unit acquires the data generated by the scintillating fibres via the received set of two output signals. The number of channels that are associated with the DAQ unit are in the form of communication channels that enables receiving of the set of two output signals from the resistive encoder module. For example, the DAQ unit is configured with 4 channels corresponding to the received set of two output signals. Notably, processing the acquired data of the DAQ unit involves analysing and interpreting the data collected by the scintillating fibres with reference to the application for which the scintillating fibres are being used.

The present disclosure also relates to the method. Various embodiments and variants disclosed above, with respect to the aforementioned system, apply *mutatis mutandis* to the method.

The present disclosure also relates to the apparatus. Various embodiments and variants disclosed above, with respect to the aforementioned system, apply *mutatis mutandis* to the apparatus.

### EXPERIMENTAL PART

A test simulation was performed to test effectiveness of channel multiplexing in channels interfaced with DAQ device to acquire data from a plurality of SiPMs connected to a respective plurality of scintillating fibres. In the test simulation, 64 SiPMs connected to respective 64 scintillating fibres, were arranged in an array of 8 rows and 8 columns, where each of the 64 SiPMs was arranged to a respective row and a respective column. Moreover, each of the 64 SiPMs were connected with a respective charge division module that divides signal of the each of 64 SiPMs between the respective row and the respective column with which the each of 64 SiPMs were connected. In the test simulation, the charge division module was firstly implemented using a diode division technique, then secondly implemented as a resistor division technique, and thirdly as a combination of the diode division technique and the resistor division technique. It was observed that the arrangement of the 64 SiPMs in the array reduced a number of channels to required to be interfaced with the DAQ device from 64 channels (i.e., a separate channel for each of the 64 SiPMs) to 16 channels, where the 16 channels were the 8 rows and the 8 columns of the array of 64 SiPMs. Furthermore, out of the 16 channels, 8 channels of the respective 8 rows were connected to a first resistive encoding module which used the 8 channels as input channels and provided encoded output for the 8 channels in form of a first set of two output voltages using 2 output channels. The remaining 8 channels of the respective 8 columns were connected to a second resistive encoded module which used the remaining 8 channels as the input channels and provided the encoded output for the remaining 8 channels in form of a second set of two output voltages using 2 more output channels. The 4 output channels were then interfaced with the DAQ device which can acquire data from any of the 64 SiPMs using the 4 output channels. Therefore, it was experimentally determined using the test simulation that the implementation of channel multiplexing using different types of the charge division technique (i.e., the diode division technique, the resistor division technique, the combination of the diode division technique and the resistor division technique) and the resistive encoding technique enables to effectively reduce the number channels from 64 channels to 4 output channels to be interfaced with the DAQ device, where the data acquired by the DAQ device using the 4 output channels was accurate.

### DETAILED DESCRIPTION OF THE DRAWINGS

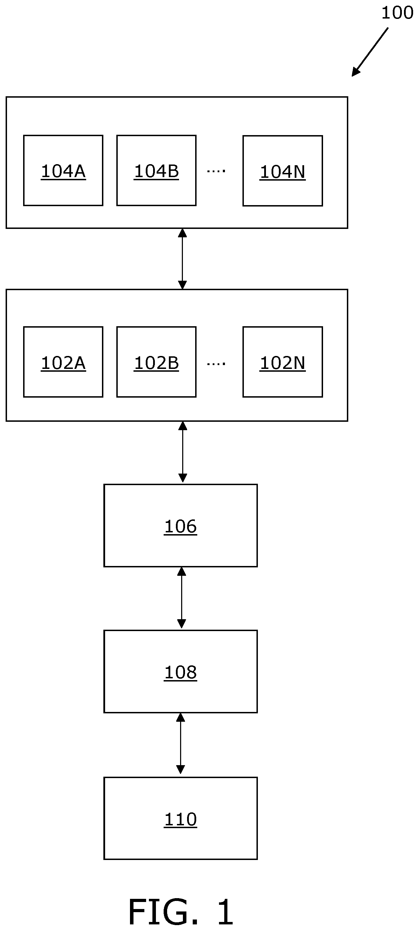

Referring to FIG. 1, illustrated is a block diagram of a system **100** for channel multiplexing for Silicon Photomultipliers (SiPMs) **102A-N** connected to scintillating fibres **104A-N,** in accordance with an embodiment of the present disclosure. Herein, the system comprises a plurality of SiPMs **102A-N** arranged in a matrix, with each of the plurality of SiPMs **102A-N** being connected to one of the scintillating fibres **104AN**; a charge division module **106** interfacing with the plurality of SiPMs **102A-N;** a resistive encoding module **108** interfacing with the charge division module **106,** a data acquisition (DAQ) unit **110** interfacing with the resistive encoding module **108.**

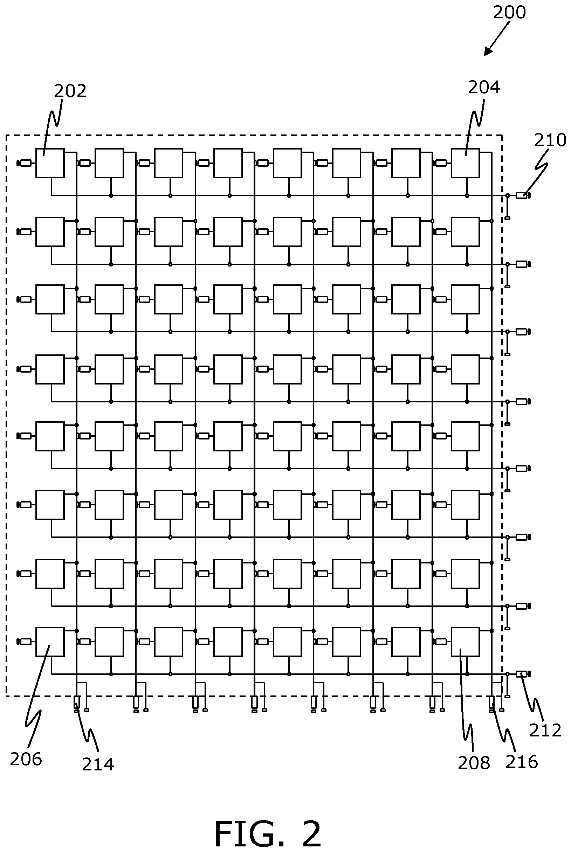

Referring to FIG. 2, illustrated is a schematic illustration of a plurality of Silicon Photomultipliers (SiPMs) arranged in a matrix **200,** in accordance with an embodiment of the present disclosure. Herein, SiPMs **202, 204, 206,** and **208** are some of the SiPMs from among the plurality of SiPMs. Rows **210** and **212** are some of the rows present in the matrix **200,** and columns **214** and **216** are some of the columns present in the matrix **200.** In this regard, the SiPM **202** is connected to the row **210** and the column **214** of the matrix **200.** Similarly, the SiPM **204** is connected to the row **210** and the column **216** of the matrix **200.** Also, the SiPM **206** is connected to the row **212** and the column **214** of the matrix **200.** Similarly, the SiPM **208** is connected to the row **212** and the column **216** of the matrix **200.**

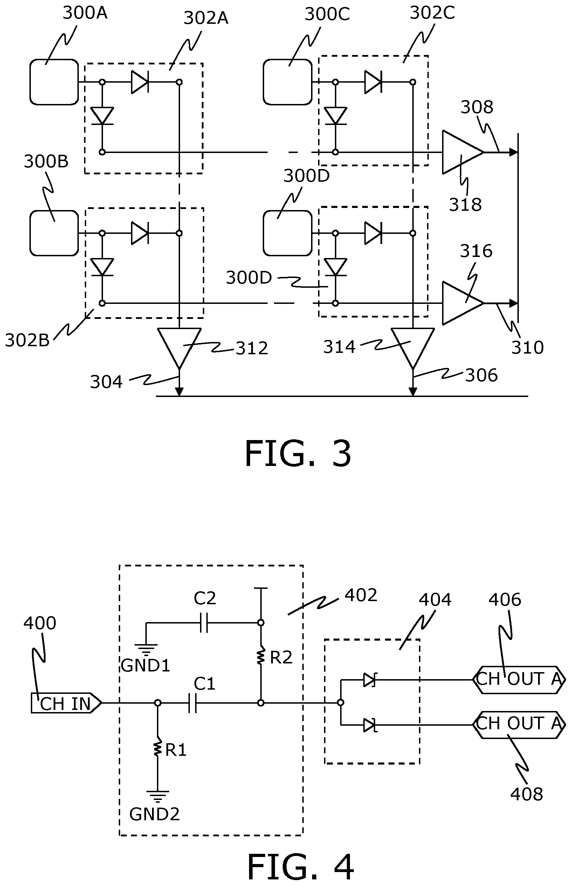

Referring to FIG. 3, illustrated is a schematic illustration of diode division technique implemented in a charge division module for a plurality of SiPMs, in accordance with an embodiment of the present disclosure. Herein, the SiPMs **300A, 300B, 300C** and **300D** are some of the SiPMs from amongst the plurality of SiPMs arranged in a matrix. In this regard, the SiPMs **300A, 300B, 300C** and **300D** are interfaced with diode arrangements **302A, 302B, 302C** and **302D** to implement the diode division technique. Subsequently, rows **304** and **306** are some of the rows present in the matrix and similarly, columns **308** and **310** are some of the columns present in the matrix. Herein, the rows **304** and **306** have amplifiers **312** and **314** connected thereat, the columns **308** and **310** have amplifiers **316** and **318** connected thereat.

Referring to FIG. 4, illustrated is a schematic illustration of biasing of a diode division module, in accordance with an embodiment of the present disclosure. Herein, an input channel **400** is connected to a circuit **402** for biasing the diode division module which is implemented via an arrangement of diodes **404.** Subsequently, the arrangement of diodes **404** is connected to output channels **406** and **408.**

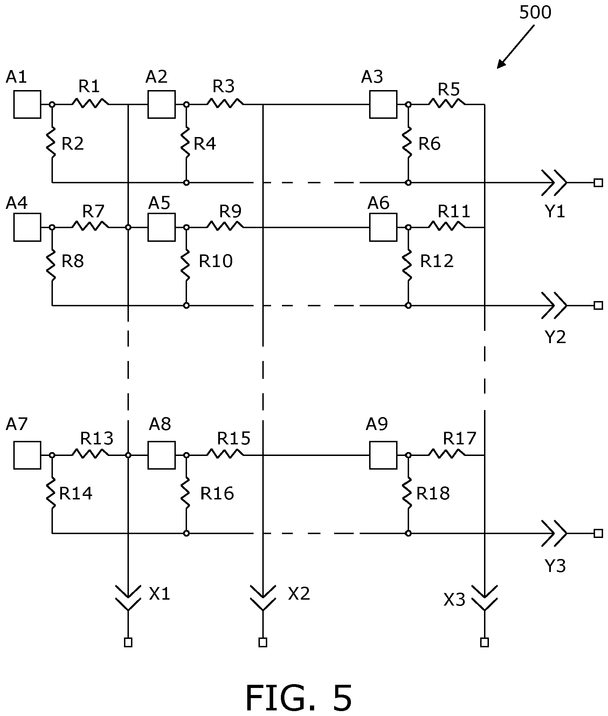

Referring to FIG. 5, illustrated is a schematic illustration of resistor division technique implemented in a charge division module for a plurality of SiPMs, in accordance with an embodiment of the present disclosure. Herein, SiPMs **A1-9** are some of the SiPMs from amongst the plurality of SiPMs that are arranged in a matrix. Rows **X1, X2** and **X3** are some of the rows of the matrix, and columns **Y1, Y2** and **Y3** are some of the columns of the matrix. In this regard, the SiPM **A1** is connected to an arrangement of resistors **R1** and **R2** for implementing the resistor division technique in the charge division module. Similarly, the SiPM **A2** is connected to the arrangement of resistors **R3** and **R4,** the SiPM **A3** is connected to the arrangement of resistors **R5** and **R6,** the SiPM **A4** is connected to the arrangement of resistors **R7** and **R8,** the SiPM **A5** is connected to the arrangement of resistors **R9** and **R10,** the SiPM **A6** is connected to the arrangement of resistors **R11** and **R12,** the SiPM **A7** is connected to the arrangement of resistors **R13** and **R14,** the SiPM **A8** is connected to the arrangement of resistors **R15** and **R16,** the SiPM **A9** is connected to the arrangement of resistors **R17** and **R18,** respectively, for implementing the resistor division technique in the charge division module.

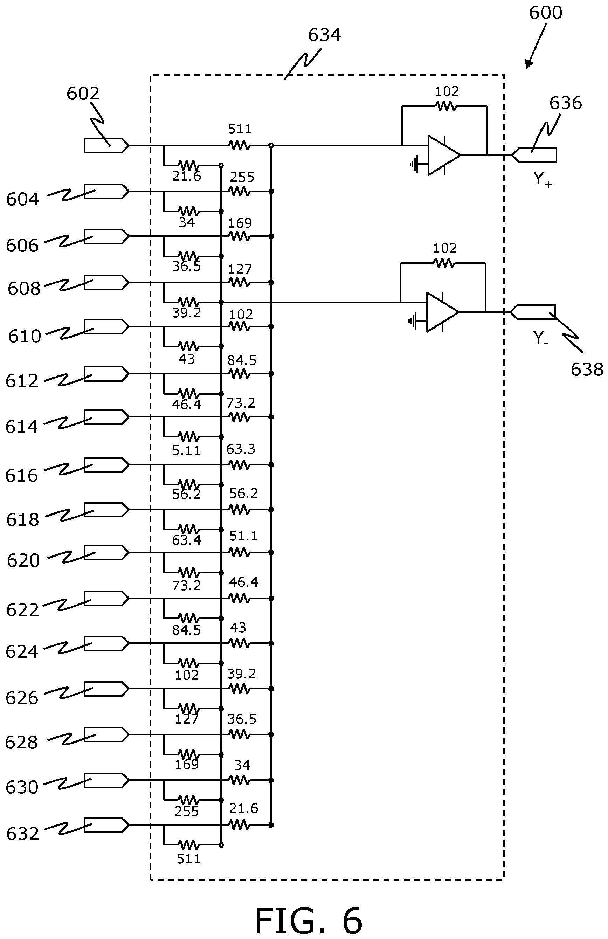

Referring to FIG. 6, illustrated is a schematic illustration of an implementation of a ladder style resistive encoding technique, in accordance with an embodiment of the present disclosure. Herein, input channels **602, 604, 606, 608, 610, 612, 614, 616, 618, 620, 622, 624, 626, 628, 630,** and **632** are connected to a ladder like arrangement **634** of a plurality of resistors. Subsequently, the ladder like arrangement **634** is connected to two output channels **636** and **638** for transmitting a set of two output signals.

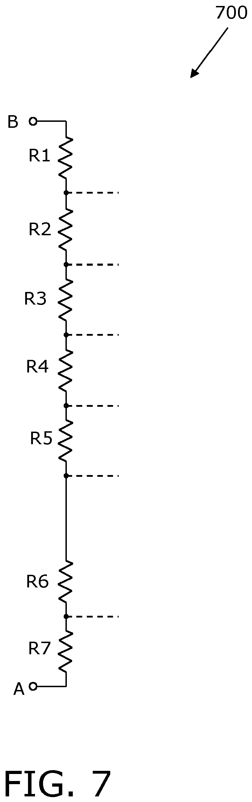

Referring to FIG. 7, illustrated is a schematic illustration of an implementation of a line style resistive encoding technique, in accordance with an embodiment of the present disclosure. Herein, resistors **R1, R2, R3, R4, R5, R6** and **R7** are arranged in a line style arrangement to implement the line style resistive encoding technique.

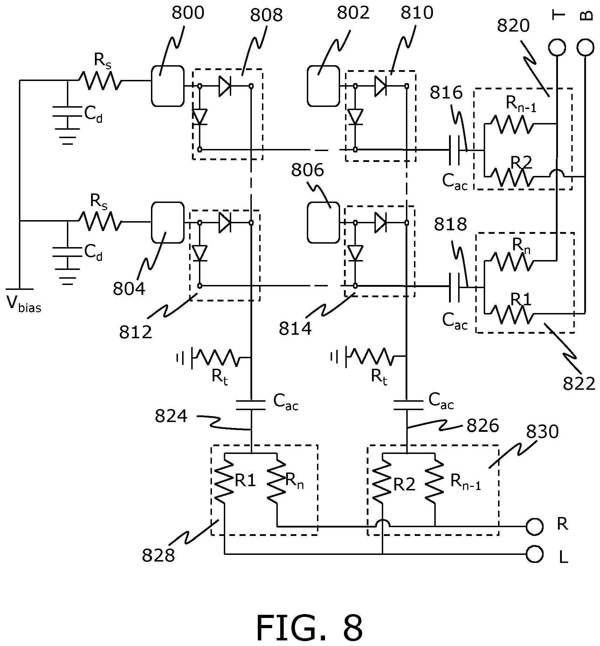

Referring to FIG. 8, illustrated is a schematic illustration of diode division technique and resistor division technique implemented as a combination in a charge division module for a plurality of SiPMs, in accordance with an embodiment of the present disclosure. Herein, SiPMs **800, 802, 804,** and **806** are some of the SiPMs from amongst the plurality of SiPMs arranged in a matrix. In this regard, the SiPM **800** is connected to an arrangement of diodes **808,** the SiPM **802** is connected to the arrangement of diodes **810,** the SiPM **804** is connected to the arrangement of diodes **812,** the SiPM **806** is connected to the arrangement of diodes **814,** respectively, to implement the diode division technique in the charge division module. Rows **816** and **818** from the matrix over which the diode division technique is implemented are connected to an arrangement of resistors **820** and **822,** respectively, to implement the resistor division technique in the charge division module. Similarly, columns **824** and **826** from the matrix over which the diode division technique is implemented are connected to an arrangement of resistors **828** and **830,** respectively, to implement the resistor division technique in the charge division module.

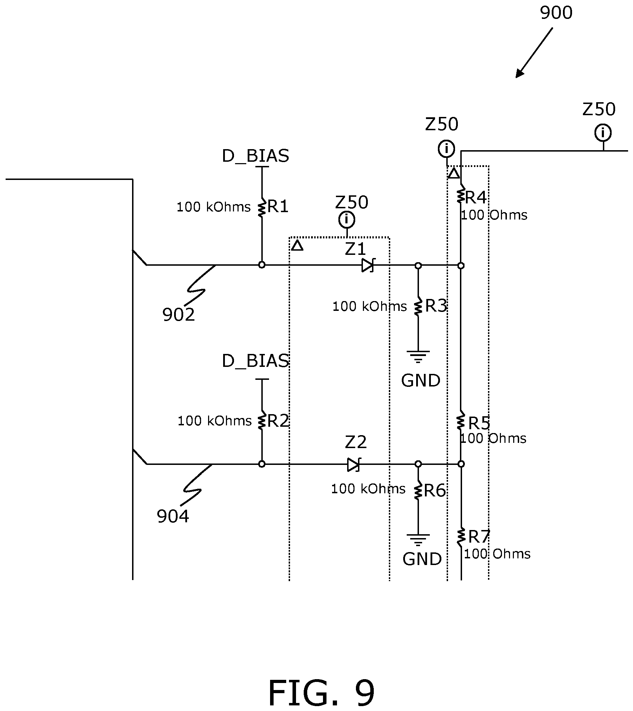

Referring to FIG. 9, illustrated is a schematic illustration of biasing of diodes arranged for implementing the diode division technique in a matrix 900, in accordance with an embodiment of the present disclosure. Herein, a first row 902 of the matrix 900 is connected to a first diode Z1. Subsequently, a voltage source D_BIAS and a resistor R1(100 kOhms) are connected to the first row 902 for biasing the first diode Z1. Similarly, a second row 904 of the matrix 900 is connected to a second diode Z2. Subsequently, the voltage source D_BIAS and a resistor R2(100 kOhms) are connected to the second row 904 for biasing the second diode Z2. Notably, the biasing of the first diode Z1 and the second diode Z2 enables the first diode Z1 and the second diode Z2 to operate with low intensity signals.

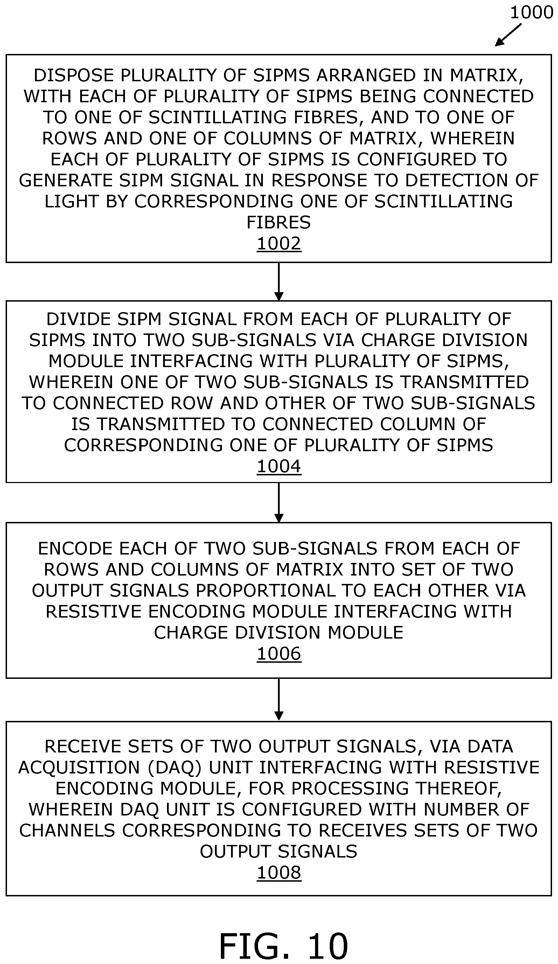

Referring to FIG. 10, illustrated is a flowchart 900 depicting steps of a method for channel multiplexing for Silicon Photomultipliers (SiPMs) connected to scintillating fibres, in accordance with an embodiment of the present disclosure. At a step **1002,** a plurality of SiPMs arranged in a matrix are disposed, with each of the plurality of SiPMs being connected to one of the scintillating fibres, and to one of rows and one of columns of the matrix, wherein each of the plurality of SiPMs is configured to generate an SiPM signal in response to detection of light by the corresponding one of the scintillating fibres. At a step **1004,** the SiPM signal from each of the plurality of SiPMs is divided into two sub-signals via a charge division module interfacing with the plurality of SiPMs, wherein one of the two sub-signals is transmitted to the connected row and other of the two sub-signals is transmitted to the connected column of the corresponding one of the plurality of SiPMs. At a step **1006,** each of the two sub-signals from each of the rows and columns of the matrix are encoded into a set of two output signals proportional to each other via a resistive encoding module interfacing with the charge division module. At a step **1008,** the sets of two output signals are received, via a data acquisition (DAQ) unit interfacing with the resistive encoding module, for processing thereof, wherein the DAQ unit is configured with a number of channels corresponding to the receives sets of two output signals.

The aforementioned steps **1002, 1004, 1006** and **1008** are only illustrative and other alternatives can also be provided where one or more steps are added, one or more steps are removed, or one or more steps are provided in a different sequence without departing from the scope of the claims herein.

## Claims

1. A system (100) for channel multiplexing for Silicon Photomultipliers (SiPMs) (102A-N, 202, 204, 206, 208, 300A-D, A1-9, 800, 802, 804, 806) connected to scintillating fibres (104A-N), the system comprising:
- a plurality of SiPMs (102A-N, 202, 204, 206, 208, 300A-D, A1-9, 800, 802, 804, 806) arranged in a matrix (200), with each of the plurality of SiPMs being connected to one of the scintillating fibres, and to one of rows (210, 212, 304, 306, X1, X2, X3, 816, 818) and one of columns (214, 216, 308, 310, Y1, Y2, Y3, 824, 826) of the matrix, wherein each of the plurality of SiPMs is configured to generate an SiPM signal in response to detection of light by the corresponding one of the scintillating fibres;
- a charge division module (106) interfacing with the plurality of SiPMs and configured to divide the SiPM signal from each of the plurality of SiPMs into two sub-signals, and wherein one of the two sub-signals is transmitted to the connected row and other of the two sub-signals is transmitted to the connected column of the corresponding one of the plurality of SiPMs;
- a resistive encoding module (108) interfacing with the charge division module and configured to encode each of the two sub-signals from each of the rows and columns of the matrix into a set of two output signals proportional to each other; and
- a data acquisition (DAQ) unit (110) interfacing with the resistive encoding module and configured to receive the sets of two output signals for processing thereof, wherein the DAQ unit is configured with a number of channels corresponding to the receives sets of two output signals.

2. A system (100) according to claim 1, wherein the charge division module implements one of diode division technique and resistor division technique.

3. A system (100) according to claim 2, wherein diodes in the diode division module are biased with a constant current to overcome the low light intensity from the scintillating fibres (104A-N).

4. A system (100) according to any of claims 1-3, wherein the resistive encoding module implements one of ladder style resistive encoding technique (600) and line style resistive encoding technique.

5. A system (100) according to any of claims 1-4, wherein diodes in the resistive encoding module are biased with a constant current to overcome the low light intensity from the scintillating fibres (104A-N).

6. A system (100) according to claims 2 and 4, wherein the resistor division technique is implemented in the charge division module and the ladder style resistive encoding technique is implemented in the resistive encoding module.

7. A system (100) according to any of preceding claims, wherein the plurality of SiPMs (102A-N, 202, 204, 206, 208, 300A-D, A1-9, 800, 802, 804, 806) are arranged in an 8x8 matrix system, and wherein the charge division module and the resistive encoding module operate to provide a multiplexing ratio of 64 to 4, or 16.

8. A system (100) according to any of preceding claims further comprising a plurality of amplifiers (312, 314, 316, 318) configured to amplify SiPM signals to prevent losses during multiplexing, wherein the plurality of amplifiers comprises one or more of: Radio Frequency (RF) amplifiers, transistor amplifiers and trans-impedance amplifier.

9. A method for channel multiplexing for Silicon Photomultipliers (SiPMs) (102A-N, 202, 204, 206, 208, 300A-D, A1-9, 800, 802, 804, 806) connected to scintillating fibres (104A-N), the method comprising:
- disposing a plurality of SiPMs (102A-N, 202, 204, 206, 208, 300A-D, A1-9, 800, 802, 804, 806) arranged in a matrix (200), with each of the plurality of SiPMs being connected to one of the scintillating fibres, and to one of rows (210, 212, 304, 306, X1, X2, X3, 816, 818) and one of columns (214, 216, 308, 310, Y1, Y2, Y3, 824, 826) of the matrix, wherein each of the plurality of SiPMs is configured to generate an SiPM signal in response to detection of light by the corresponding one of the scintillating fibres;
- dividing the SiPM signal from each of the plurality of SiPMs into two sub-signals via a charge division module (106) interfacing with the plurality of SiPMs, wherein one of the two sub-signals is transmitted to the connected row and other of the two sub-signals is transmitted to the connected column of the corresponding one of the plurality of SiPMs;
- encoding each of the two sub-signals from each of the rows and columns of the matrix into a set of two output signals proportional to each other via a resistive encoding module (108) interfacing with the charge division module; and
- receiving the sets of two output signals, via a data acquisition (DAQ) unit (110) interfacing with the resistive encoding module, for processing thereof, wherein the DAQ unit is configured with a number of channels corresponding to the receives sets of two output signals.

10. An apparatus for channel multiplexing for Silicon Photomultipliers (SiPMs) (102A-N, 202, 204, 206, 208, 300A-D, A1-9, 800, 802, 804, 806) connected to scintillating fibres (104A-N), wherein a plurality of SiPMs (102A-N, 202, 204, 206, 208, 300A-D, A1-9, 800, 802, 804, 806) arranged in a matrix (200), with each of the plurality of SiPMs being connected to one of the scintillating fibres, and to one of rows (210, 212, 304, 306, X1, X2, X3, 816, 818) and one of columns (214, 216, 308, 310, Y1, Y2, Y3, 824, 826) of the matrix, wherein each of the plurality of SiPMs is configured to generate an SiPM signal in response to detection of light by the corresponding one of the scintillating fibres, the apparatus comprising:
- a charge division (106) module interfacing with the plurality of SiPMs and configured to divide the SiPM signal from each of the plurality of SiPMs into two sub-signals, and wherein one of the two sub-signals is transmitted to the connected row and other of the two sub-signals is transmitted to the connected column of the corresponding one of the plurality of SiPMs;
- a resistive encoding module (108) interfacing with the charge division module and configured to encode each of the two sub-signals from each of the rows and columns of the matrix into a set of two output signals proportional to each other; and
- a number of channels corresponding to the receives sets of two output signals connected to a data acquisition (DAQ) unit (110) for interfacing with the resistive encoding module and configured to receive the sets of two output signals for processing thereby.
